(19) Europäisches Patentamt / European Patent Office / Office européen des brevets

(11) EP 2 718 385 B1

(12) EUROPÄISCHE PATENTSCHRIFT

(45) Veröffentlichungstag und Bekanntmachung des Hinweises auf die Patenterteilung:
**11.03.2015 Patentblatt 2015/11**

(21) Anmeldenummer: **12725456.3**

(22) Anmeldetag: **05.06.2012**

(51) Int Cl.:
***C09J 133/00*** *(2006.01)*

(86) Internationale Anmeldenummer:
**PCT/EP2012/060546**

(87) Internationale Veröffentlichungsnummer:
**WO 2012/168208 (13.12.2012 Gazette 2012/50)**

(54) **SCHMELZKLEBSTOFF, ENTHALTEND STRAHLUNGSVERNETZBARES POLY(METH)ACRYLAT UND OLIGO(METH)ACRYLAT MIT NICHT-ACRYLISCHEN C-C-DOPPELBINDUNGEN**

HOT MELT ADHESIVE CONTAINING RADIATION CURABLE POLY(METH)ACRYLATE AND OLIGO (METH)ACRYLATE HAVING NON-ACRYLIC C-C DOUBLE BONDS

ADHESIF THERMOFUSIBLE DURCISSABLE PAR RAYONNEMENT CONTANANT DU POLY (MÉTH)ACRYLATE ET DE L'OLIGO(MÉTH)ACRYLATE CONTENANT DES C-C DOUBLE LIAISONS NON ACRYLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2011 EP 11168950**

(43) Veröffentlichungstag der Anmeldung:
**16.04.2014 Patentblatt 2014/16**

(73) Patentinhaber: **BASF SE**
**67056 Ludwigshafen (DE)**

(72) Erfinder:
- **LICHT, Ulrike**
  **68309 Mannheim (DE)**
- **WULFF, Dirk**
  **67105 Schifferstadt (DE)**
- **CHRIST, Thomas**
  **67159 Friedelsheim (DE)**
- **FILGES, Ulrich**
  **67433 Neustadt (DE)**

(56) Entgegenhaltungen:
**EP-A1- 1 469 036**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft einen strahlungsvernetzbaren Schmelzklebstoff, enthaltend mindestens ein strahlungsvernetzbares Poly(meth)acrylat, welches aus C1- bis C10-Alkyl(meth)acrylaten gebildet ist und mindestens ein Oligo(meth)acrylat, welches nicht-acrylische C-C-Doppelbindungen aufweist. Der Schmelzklebstoff enthält einen Fotoinitiator und kann zur Herstellung von Klebebändern verwendet werden.

Strahlungsvernetzbare Schmelzklebstoffe sind beispielsweise bekannt aus DE 102004058070, EP-A 246 848, EP-A 377 191, EP-A 445 641 oder WO 01/23488. Bei Haftklebstoffen ist sowohl eine gute Haftung (Adhäsion) zum Substrat als auch eine ausreichende innere Festigkeit (Kohäsion) gewünscht. Strahlungshärtbare Haftklebstoffe, insbesondere von Wasser und Lösemittel freie Schmelzhaftklebstoffe haben in der Regel eine gute Adhäsion. Die Kohäsion kann durch Bestrahlung mit energiereichem Licht erhöht werden. Durch Art und Dauer der Bestrahlung kann die gewünschte Kohäsion eingestellt werden. Vorteil ist, dass sich ein Schmelzhaftklebstoff mit bestimmter chemischer Zusammensetzung für unterschiedliche Verwendungen eignen kann, je nachdem, welche Kohäsion durch die Bestrahlung eingestellt wird.

Für manche Anwendungen, insbesondere für hochkohäsive Klebebänder ist aber die Kohäsion bei Raumtemperatur oder bei höheren Temperaturen, z.B. bei 70 °C und dadurch bedingt die Scherfestigkeit nach Bestrahlen noch nicht ausreichend. Eine höhere Kohäsion von Schmelzklebstoffen auf Basis von sogenannten Acrylat-Hotmelts wäre theoretisch erreichbar durch mehr polare Gruppen in den Acrylatpolymeren. UV-härtende Acrylat Hotmelts mit höheren Anteilen an polaren Gruppen (z.B. Acrylsäure, Vinylpyrrolidon, Hydroxyethylacrylat, Ureidomethacrylat, usw.) weisen aber bei der üblichen Beschichtungstemperatur von 130°C eine sehr hohe Nullviskosität von größer 100 Pa s auf, während Standardprodukte mit keinen oder wenig polaren Gruppen üblicherweise nur Nullviskositäten von kleiner 70 Pas haben. Durch die hohe Viskosität sind die stark polaren Acrylat-Hotmelts aber nicht ohne weiteres im konventionellen Beschichtungsprozess einsetzbar. Viskositätssenkende Additive wie Weichmacher, Harze und niedermolekulare Abmisch-Polymere, können zwar die Viskosität absenken und eine Beschichtung ermöglichen, zerstören aber schon bei kleinen eingesetzten Mengen die gewünschte Kohäsion wieder und haben wegen häufig auftretenden Migrationen auch ungünstigen Einfluss auf die Adhäsion und Schälfestigkeiten. Weiterhin sind solche Zusätze oft zu stark UV-absorbierend oder führen im Hotmelt zu Trübungen, was die UV-Vernetzung empfindlich stören kann.

Der Erfindung liegt die Aufgabe zugrunde, einen Schmelzklebstoff mit möglichst hoher Kohäsion aber gleichzeitig möglichst geringer Viskosität bei der Beschichtungstemperatur zur Verfügung zu stellen, wobei die Bestandteile thermisch möglichst stabil sein sollten und die oben genannten Nachteile möglichst vermieden werden sollten.

Die Aufgabe wird erfindungsgemäß gelöst durch einen strahlungsvernetzbaren Schmelzklebstoff, enthaltend

(A) mindestens ein strahlungsvernetzbares Poly(meth)acrylat, welches zu mindestens 60 Gew.% aus C1- bis C18-Alkyl(meth)acrylaten gebildet ist und

(B) mindestens ein Oligo(meth)acrylat, welches eine oder mehrere nicht-acrylische, olefinische C-C-Doppelbindungen enthält und einen K-Wert von kleiner oder gleich 20 aufweist,

wobei der Schmelzklebstoff mindestens einen Fotoinitiator enthält, wobei der Fotoinitiator als nicht an das Poly(meth)acrylat A und nicht an das Oligo(meth)acrylat B gebundenes Additiv vorliegt und/oder der Fotoinitiator in das Poly(meth)acrylat A einpolymerisiert ist und/oder der Fotoinitiator in an das Oligo(meth)acrylat B gebunden ist.

In einer Ausführungsform liegt der Fotoinitiator ausschließlich als nicht an das Poly(meth)acrylat A und nicht an das Oligo(meth)acrylat B gebundenes Additiv vor. In einer anderen Ausführungsform liegt der Fotoinitiator ausschließlich als in das Poly(meth)acrylat A einpolymerisierte Komponente und/oder als an das Oligo(meth)acrylat B gebundene Komponente vor. In einer Ausführungsform liegt der Fotoinitiator ausschließlich als in das Poly(meth)acrylat A einpolymerisierte Komponente vor.

In einer Ausführungsform weist das unvernetzte Poly(meth)acrylat A einen K-Wert von mindestens 30 auf und/oder das unvernetzte Poly(meth)acrylat A enthält keine nicht-acrylischen, olefinischen C-C-Doppelbindungen.

Der Begriff strahlungsvernetzbar bedeutet, dass der Schmelzklebstoff mindestens eine Verbindung mit mindestens einer strahlungsempfindlichen Gruppe enthält und bei Bestrahlung eine Vernetzungsreaktion induziert wird. Die Bestrahlung erfolgt vorzugsweise mit aktinischer Strahlung, vorzugsweise UV-Licht, insbesondere UV-C Strahlung.

Schmelzklebstoffe, die auch als Heißklebestoffe, Heißkleber, Heißleim oder Hotmelt bekannt sind, sind lösungsmittelfreie und bei Raumtemperatur mehr oder weniger feste Produkte, die im heißen Zustand aufgrund der damit verbundenen Viskositätserniedrigung auf eine Klebefläche aufgetragen werden können, und beim Abkühlen die Klebeverbindung herstellen, wobei strahlungsvernetzbare Schmelzklebstoffe dabei noch bestrahlt werden können.

Im Folgenden werden gelegentlich die Bezeichnung "(Meth)acryl..." und ähnliche Bezeichnungen als abkürzende Schreibweise verwendet für "Acryl... oder Methacryl...".

Zur Erreichung einer guten viskositätssenkenden Wirkung bei gleichzeitig guter Kohäsion liegt das Gewichtsverhältnis von strahlungsvernetzbarem Poly(meth)acrylat zu Oligo(meth)acrylat vorzugsweise im Bereich von 99:1 bis

50:50, besonders bevorzugt von 95:5 bis 75: 25.

Zur Strahlungsvernetzung enthält der Schmelzklebstoff einen Fotoinitiator. Der Fotoinitiator ist vorzugsweise in dem Poly(meth)acrylat A copolymerisiert. Er kann aber auch ungebunden und lediglich mit dem Polymerisat vermischt sein. Übliche Fotoinitiatoren, die dem Polymerisat als Additiv zugesetzt werden können, sind z. B. Acetophenon, Benzoinether, Benzyldialkylketole oder deren Derivate. Der Gehalt des zugemischten Fototinitiators beträgt vorzugsweise 0, 05 bis 10 Gew. Teile, besonders bevorzugt 0,1 bis 2 Gew. Teile pro 100 Gew. Teile Polymerisat A.

Durch Bestrahlung mit energiereichem Licht, insbesondere UV- Licht, bewirkt der Fotoinitiator bzw. die Fotoinitiatorgruppe eine Vernetzung des Polymeren und/oder des Oligomeren, vorzugsweise durch eine chemische Pfropfreaktion der Fotoinitiatorgruppe mit einer räumlich benachbarten Polymer- oder Oligomerkette. Insbesondere kann die Vernetzung durch Einschub einer Carbonylgruppe des Fotoinitiators in eine benachbarte C-H-Bindung unter Ausbildung einer -C-C-O-H Gruppierung erfolgen. Der Wellenlängenbereich, in dem die Fotoinitiatorgruppe aktiviert werden kann, d. h. in dem die Hauptabsorptionsbande der Fotoinitiatorgruppe liegt, ist vorzugsweise 200 bis 450 nm, besonders bevorzugt 250 bis 350 nm, ganz besonders bevorzugt 250 bis 280 nm.

Der Schmelzklebstoff enthält vorzugsweise 0,0001 bis 0,1 mol, besonders bevorzugt 0,0002 bis 0,1, ganz besonders bevorzugt 0,0003 bis 0,01 mol des Fotoinitiators, bzw. der als Fotoinitiator wirksamen, an das Polymer und/oder an das Oligomer gebundenen Molekülgruppe, pro 100 g Schmelzklebstoff.

Bei dem strahlungsvernetzbaren Poly(meth)acrylat kann es sich um einen Klebstoff auf Basis eines Polymers mit einpolymerisiertem Fotoinitiator handeln. Das Polymer kann hergestellt werden durch radikalische Polymerisation von ethylenisch ungesättigten Monomeren unter Copolymerisation von mindestens einer strahlungsempfindlichen, radikalisch polymerisierbaren organischen Verbindung. Strahlungsempfindliche, radikalisch polymerisierbare organische Verbindungen werden im Folgenden kurz als polymerisierbarer Fotoinitiator bezeichnet. Der polymerisierbare Fotoinitiator kann durch radikalische Copolymerisation in die Polymerkette von Copolymeren eingebaut werden. Polymerisierbare Fotoinitiatoren haben vorzugsweise folgenden prinzipiellen Aufbau:

A-X-B

wobei A ein einwertiger organischer Rest ist, welcher als strahlungsempfindliche Gruppe vorzugsweise eine Phenongruppe aufweist,
X eine Estergruppe ist, ausgewählt aus -O-C(=O)-, -(C=O)-O und -O-(C=O)-O-, und
B ein einwertiger organischer Rest ist, welcher eine ethylenisch ungesättigte, radikalisch polymerisierbare Gruppe enthält. Bevorzugte Reste A sind Reste, welche mindestens ein Strukturelement enthalten, welches abgeleitet ist von Phenonen, insbesondere von Acetophenonen oder Benzophenonen. Bevorzugte Reste B enthalten mindestens eine, vorzugsweise genau eine Acryl- oder Methacrylgruppe.

Die ethylenisch ungesättigte Gruppe kann direkt an die Gruppe X gebunden sein. Ebenso kann die strahlungsempfindliche Gruppe direkt an die Gruppe X gebunden sein. Es können sich aber auch zwischen ethylenisch ungesättigter Gruppe und der Gruppe X bzw. zwischen strahlungsempfindlicher Gruppe und Gruppe X jeweils eine Spacergruppe (Abstandshalter) befinden. Die Spacergruppe kann z.B. ein Molekulargewicht von bis zu 500, insbesondere bis zu 300 oder 200 g/Mol aufweisen.

Geeignete Fotoinitiatoren sind z.B. Verbindungen mit Acetophenon- oder Benzophenonstruktureinheiten, beispielsweise beschrieben in EP 377191 A oder EP 1213306 A. Eine bevorzugte Gruppe X ist die Carbonatgruppe -O-(C=O)-O-. Bevorzugte polymerisierbare Fotoinitiatoren sind Verbindungen der Formel F-1:

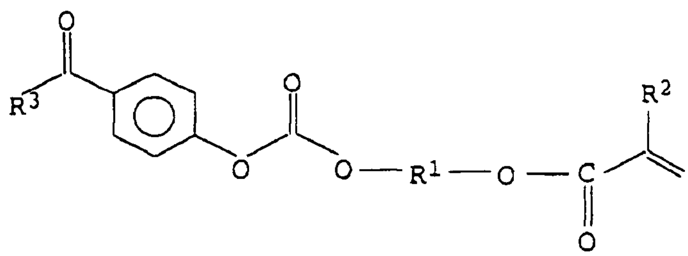

F-1

worin R1 für einen organischen Rest mit bis zu 30 C-Atomen, R2 für ein H-Atom oder eine Methylgruppe und R3 für eine substituierte oder unsubstituierte Phenylgruppe oder für eine C1-C4-Alkylgruppe steht. R1 steht besonders bevorzugt für eine Alkylengruppe, insbesondere für eine C2-C8-Alkylengruppe. R3 steht besonders bevorzugt für eine Methylgruppe oder für eine Phenylgruppe, ganz besonders bevorzugt für eine Phenylgruppe.

Weitere, als copolymerisierbare Fotoinitiatoren geeignete Acetophenon- und Benzophenonderivate sind z.B.

solche der Formel F-2

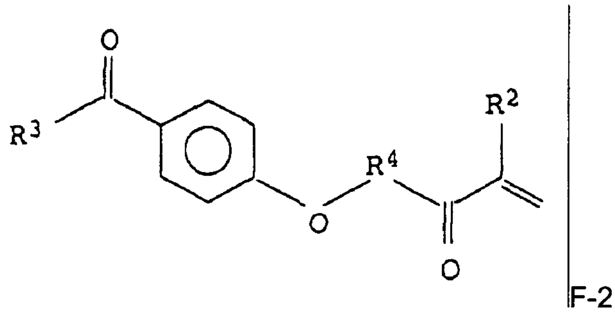

F-2

worin R2 und R3 die obige Bedeutung haben kann und R4 für eine Einfachbindung oder für (-CH2-CH2-O)n stehen kann, wobei n für eine ganze Zahl von 1 bis 12 steht.

Das Poly(meth)acrylat ist im Fall des einpolymerisierten Fotoinitiators vorzugsweise zu 0,05 bis 10 Gew.-% oder zu 0,05 bis 5 Gew.-%, besonders bevorzugt zu 0,1 bis 2 Gew.-% oder zu 0,1 bis 1 Gew.-% aus mindestens einer ethylenisch ungesättigten, copolymerisierbaren Verbindung mit einer Fotoinitiatorgruppe gebildet.

Das strahlungsvernetzbare Poly(meth)acrylat ist zu mindestens 60 Gew.%, bevorzugt zu mindestens 80 Gew.% aus C1- bis C18-Alkyl(meth)acrylaten gebildet. Bevorzugt sind C1- bis C10-Alkyl(meth)acrylate, insbesondere C1-C8 Alkyl(meth)acrylate, z.B. Methyl(meth)acrylat, Ethylacrylat, n-Butylacrylat, n-Hexylacrylat, 2-Propylhexylacrylat und 2-Ethylhexylacrylat und deren Mischungen.

In einer Ausführungsform der Erfindung besteht das Poly(meth)acrylatpolymer zu mindestens 80 Gew.% aus mindestens einem Acrylat welches ausgewählt ist aus der Gruppe bestehend aus n-Butylacrylat, n-Hexylacrylat, 2-Ethylhexylacrylat, 2-Propylhexylacrylat und deren Mischungen oder das Poly(meth)acrylatpolymer besteht zu mindestens 90 Gew.% aus 2-Ethyl-hexylacrylat.

Das Poly(meth)acrylatpolymer kann aus weiteren, ethylenisch ungesättigte, Verbindungen als Aufbaukomponenten gebildet sein, z.B. Vinylester von bis zu 20 C-Atome enthaltenden Carbonsäuren, Vinylaromaten mit bis zu 20 C-Atome, ethylenisch ungesättigten Nitrile, Vinylhalogenide, Vinylether von 1 bis 10 C-Atome enthaltenden Alkoholen, aliphatischen Kohlenwasserstoffe mit 2 bis 8 C-Atomen und 1 oder 2 Doppelbindungen oder Mischungen dieser Monomeren. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen z.B. Vinyltoluol, alpha- und p-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt sind Vinylether von 1 bis 4 C-Atome enthaltenden Alkoholen. Als Kohlenwasserstoffe mit 2 bis 8 C-Atomen und zwei olefinischen Doppelbindungen seien Butadien, Isopren und Chloropren genannt. Als weitere Monomere in Betracht kommen insbesondere auch Monomere mit Carbonsäure-, Sulfonsäure- oder Phosphonsäuregruppen. Bevorzugt sind Carbonsäuregruppen. Genannt seien z. B. Acrylsäure, Methacrylsäure, Itaconsäure, Maleinsäure oder Fumarsäure. Weitere Monomere sind z. B. auch (Meth)acrylamid und Hydroxylgruppen enthaltende Monomere, insbesondere C1-C10-Hydroxyalkyl-(meth)acrylate. Darüber hinaus seien Phenyloxyethylglykolmono-(meth)acrylat, Glycidylacrylat, Glycidylmethacrylat, Amino-(meth)acrylate wie 2-Aminoethyl(meth)acrylat genannt. Monomere, die außer der Doppelbindung noch weitere funktionelle Gruppen tragen, z. B. Isocyanat-, Amino-, Hydroxy-, Amid- oder Glycidyl-, können z. B. die Haftung auf Substraten verbessern.

Das Poly(meth)acrylatpolymer ist zusätzlich zu den C1- bis C18-Alkyl(meth)acrylaten vorzugsweise aus mindestens einem Monomeren mit polaren Gruppen gebildet. Monomer mit polaren Gruppen sind z.B. Monomere, bei denen die polaren Gruppen ausgewählt sind aus Carbonsäuregruppen, Carbonsäureanhydridgruppen, Hydroxygruppen, Ureidogruppen, Pyrrolidongruppen, Amidgruppen, Urethangruppen, Harnstoffgruppen, Piperidinylgruppen, Piperazinylgruppen, Morpholinylgruppen, Imidazoylgruppen und Kombinationen von zwei oder mehr der genannten Gruppen. Bevorzugte Monomere mit Carbonsäuregruppen sind Acrylsäure und Methacrylsäure. Bevorzugte Monomere mit Hydroxygruppen sind C1-C10-Hydroxyalkyl(meth)acrylate, insbesondere Hydroxyethyl(meth) acrylat und Hydroxypropyl(meth) acrylat.

Die Monomeren mit polaren Gruppen haben vorzugsweise eine Wasserlöslichkeit bei 21 °C größer 5 g/Liter oder größer 10 g/Liter. Das Poly(meth)acrylatpolymer ist vorzugsweise zu 0,1 bis 30 Gew.%, besonders bevorzugt zu 0,5 bis 25 Gew.% oder zu 1 bis 15 Gew.% aus den Monomeren mit polaren Gruppen gebildet.

In einer Ausführungsform ist das Poly(meth)acrylat gebildet aus

(a1) mindestens 80 Gew.% mindestens einem Acrylat, welches ausgewählt ist aus der Gruppe bestehend aus n-Butylacrylat, n-Hexylacrylat, 2-Ethyl-hexylacrylat, Propylheptylacrylat und deren Mischungen und
(a2) 1 bis 15 Gew.% mindestens eines Monomers mit polaren Gruppen, welches ausgewählt ist aus der Gruppe bestehend aus Carbonsäuregruppen, Carbonsäureamidgruppen, Pyrrolidongruppen, Urethangruppen und Harnstoffgruppen.

Die Glasübergangstemperatur (Tg) des strahlungsvernetzbaren Polymers liegt vorzugsweise im Bereich von -60 bis +10 °C, insbesondere im Bereich von -60 bis 0°C, oder von -55°C bis - 10°C, besonders bevorzugt von -55 °C bis -20 °C. Die Glasübergangstemperatur lässt sich nach üblichen Methoden wie Differentialthermoanalyse oder Differential Scanning Calorimetrie (s. z.B. ASTM 3418/82, sog. "midpoint temperature") bestimmen. Durch die sogenannte Foxgleichung ist es dem Fachmann möglich, Copolymere im geeigneten Tg-Bereich vorab zu identifizieren und diese durch geeignete Variation von Art und Menge der Monomeren gezielt herzustellen. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, 5. Aufl., Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Das strahlungsvernetzbare Polymer hat vorzugsweise einen K-Wert von 30 bis 80, besonders bevorzugt von 40 bis 60, gemessen in Tetrahydrofuran (1 %ige Lösung, 21 °C). Der K-Wert nach Fikentscher ist ein Maß für das Molekulargewicht und die Viskosität des Polymerisats. Die Oligo(meth)acrylate weisen eine oder mehrere nicht-acrylische, olefinische C-C-Doppelbindungen auf. Sie haben einen K-Wert von kleiner oder gleich 20, vorzugsweise von 10 bis 20, gemessen in Tetrahydrofuran (1%ige Lösung, 21 °C).

Vorzugsweise bestehen die Oligo(meth)acrylate zu mindestens 40 Gew.-%, besonders bevorzugt zu mindestens 60 Gew.-%, ganz besonders bevorzugt zu mindestens 80 Gew.-% aus sogenannten Hauptmonomeren. Die Hauptmonomeren sind ausgewählt aus C1-C20-Alkyl(meth)-acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren. Zu nennen sind z. B. (Meth)acrylsäurealkylester mit einem C1-C10-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, -stearat, Vinylpropionat, Versaticsäurevinylester und Vinylacetat. Als vinylaromatische Verbindungen kommen Vinyltoluol, alpha- und p-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 2 bis 8 C-Atomen und ein oder zwei olefinischen Doppelbindungen seien Butadien, Isopren und Chloropren, Ethylen oder Propylen genannt. Als Hauptmonomere bevorzugt sind die C1- bis C10-Alkylacrylate und-methacrylate, insbesondere C1- bis C8-Alkylacrylate und -methacrylate, wobei die Acrylate jeweils besonders bevorzugt sind. Ganz besonders bevorzugt sind Methylacrylat, Ethylacrylat, n-Butylacrylat, n-Hexylacrylat, Octylacrylat und 2-Etyhlhexylacrylat sowie Mischungen dieser Monomere.

Neben den Hauptmonomeren können die Oligo(meth)acrylate weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure. Weitere Monomere sind z. B. auch Hydroxylgruppen enthaltende Monomere, insbesondere C1-C10-Hydroxyalkyl(meth)acrylate, (Meth)acrylamid und Ureidogruppen enthaltende Monomere wie Ureido(meth)acrylate. Als weitere Monomere seien darüber hinaus Phenyloxyethylglykolmono(meth-)acrylat, Glycidylacrylat, Glycidylmethacrylat, Amino(meth-)acrylate wie 2-Aminoethyl(meth)acrylat genannt. In Betracht kommen insbesondere auch cyclische Lactame wie N-Vinylpyrrolidon oder N-Vinylcaprolactam.

Die Oligo(meth)acrylate sind bevorzugt zu mindestens 40 Gew.-%, besonders bevorzugt zu mindestens 60 Gew.-% und ganz besonders bevorzugt zu mindestens 80 Gew.-% aus C1- bis C20-Alkyl(meth)acrylaten, insbesondere

den oben genannten Alkyl(meth)acrylaten aufgebaut. Wesentliches Merkmal des Oligo(meth)acrylats ist, dass es einen Gehalt an vernetzbaren Gruppen mit nicht-acrylischen, vernetzbaren C-C-Doppelbindungen (kurz vernetzbare Gruppen) hat. Vernetzbare Doppelbindungen sind insbesondere solche, die mit anderen Doppelbindungen radikalisch polymerisierbar sind (also durch radikalische Polymerisation vernetzen) oder solche, welche durch Abspaltung eines Wasserstoffatoms Radikale bilden (also durch Reaktionen dieser Radikale vernetzen). Als vernetzbare Gruppen in Betracht kommen z. B. die Allylgruppe oder cyclische Kohlenwasserstoffgruppen mit mindestens einer nicht-aromatischen C-C-Doppelbindung. Bei der cyclischen Kohlenwasserstoffgruppe handelt es sich insbesondere um eine Dihydrodicyclopentadienylgruppe der Formel :

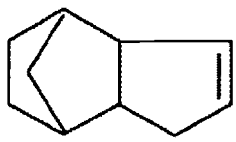

I

Die vernetzbare Gruppe kann insbesondere durch Copolymerisation mit Monomeren, welche die vernetzbare Gruppe enthalten, an das Polymer gebunden werden (vernetzbare Monomere). Geeignete vernetzbare Monomere sind z. B. Monomere, welche eine für die Polymerisation notwendige reaktive ethylenisch ungesättigte Gruppe und die vorstehende vernetzbare Gruppe enthalten. Bei der Polymerisation bleiben die vernetzbaren Gruppen zumindest zum Teil erhalten, da unter den Bedingungen der Polymerisation zunächst die reaktivere ethylenisch ungesättigte Gruppe (z. B. eine Acryl- oder Methacrylgruppe) polymerisiert. Als Monomere genannt seien Allyl(meth)acrylat oder Monomere mit einer (Meth)acrylgruppe und einer Dihydrodicyclopentadienylgruppe. Die (Meth)acrylgruppe kann direkt oder indirekt (d.h. über eine organische Gruppe als Abstandshalter bzw. Spacer) an die Dihydrodicyclopentadienylgruppe gebunden sein, bevorzugt ist Dihydrodicyclopentadienyl(meth)acrylat der Formeln:

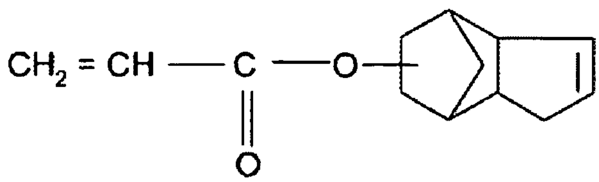

II

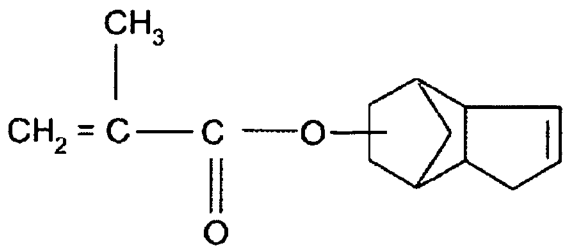

III

Das Oligo(meth)acrylat hat vorzugsweise einen Gehalt an vernetzbaren Gruppen von 0,0001 bis 0,5 Mol/100 g Oligomer, oder von 0,0002 bis 0,1 oder von 0,001 bis 0,02 oder von 0,003 bis 0,01 Mol/100g Oligomer, besonders bevorzugt von 0,005 bis 0,25 Mol/100g Oligomer. Vorzugsweise handelt es sich um ein durch Bestrahlung mit energiereichem Licht, z. B. UV-Licht oder Elektronenstrahlen vernetzbares Oligomer. Entsprechend vernetzbar ist das Oligomer z. B. durch obige vernetzbare Gruppen oder auch, wenn Wasserstoffatome von der Polymerhauptkette photochemisch, insbesondere auch unter Verwendung eines Photoinitiators oder durch Elektronenstrahlen abgetrennt werden können, sodass ein Radikal entsteht, welches weitere chemische Reaktionen eingehen kann. Das Oligomer kann zusätzlich einen der oben beschriebenen Fotoinitiatoren in einpolymerisierter Form enthalten.

Das Oligo(meth)acrylat hat vorzugsweise eine Nullviskosität bei 23°C von kleiner als 5000 Pa s, vorzugsweise kleiner als 3000 Pa s, besonders bevorzugt kleiner als 1000 Pa s.

Die Poly(meth)acrylate und die Oligo(meth)acrylate können durch Copolymerisation der monomeren Komponenten, optional einschließlich des copolymerisierbaren Fotoinitiators unter Verwendung der üblichen Polymerisationsinitiatoren sowie optional von Reglern hergestellt werden, wobei man bei den üblichen Temperaturen in Substanz, in Emulsion, z.B. in Wasser oder flüssigen Kohlenwasserstoffen, oder in Lösung polymerisiert. Die Herstellung der Oligo(meth)acrylate erfolgt dabei so, dass durch geeignete, das Molekulargewicht beschränkende Maßnahmen sichergestellt ist, dass deren K-Wert kleiner oder gleich 20 beträgt.

Die niedrigen Molmassen werden z.B. durch den Einsatz von Molekulargewichtsreglern oder durch den Einsatz

von das Molekulargewicht regelnden Lösungsmitteln wie Isopropanol oder oXylol besonders gefördert. Auch Polymerisationen bei Temperaturen größer 100°C und/oder bei geringen Feststoffgehalten sind geeignet. Alternativ können Oligo(meth)acrylate auch durch Hochtemperaturmassepolymerisation unter Druck erhalten werden, wie sie in WO 03/066704 beschrieben ist.

Vorzugsweise werden die Poly(meth)acrylate und die Oligo(meth)acrylate entweder durch Emulsionspolymerisation in Wasser oder durch Polymerisation der Monomeren in organischen Lösungsmitteln, insbesondere in organischen Lösungsmitteln eines Siedebereichs von 50 bis 150 °C, vorzugsweise von 60 bis 120 °C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt. Die Polymerisate können bei Temperaturen von 20 bis 150 °C, vorzugsweise bei Temperaturen im Bereich von 70 bis 120 °C und Drucken von 0,1 bis 100 bar (absolut), bevorzugt bei 0,3 bis 10 bar, in Gegenwart von 0,01 bis 10 Gew.-% an Peroxiden oder Azostartern als Polymerisationsinitiatoren, bezogen auf die Monomeren und in Gegenwart von 0 bis 200 Gew.-% an indifferenten Lösungsmitteln, bevorzugt 5 bis 25 Gew.-%, bezogen auf die Monomeren, d.h. durch Lösungs- oder Substanzpolymerisation hergestellt werden. Vorzugsweise erfolgt die Reaktion unter zunehmendem Vakuum, z.B. durch Absenkung des Drucks von Normaldruck (1 bar) auf 500 mbar (absolut). Lösungsmittel sind beispielsweise Kohlenwasserstoffe, Alkohole wie Methanol, Ethanol, Propanol, Butanol, Isobutanol, Ketone wie Aceton, Methylethylketon, Methylisobutylketon, Essigsäureethylester, Nitrile wie Acetonitril und Benzonitril oder Gemische aus den genannten Lösemitteln. In einer bevorzugten Ausführungsform werden als Lösungsmittel für die Polymerisation ein oder mehrere Ketone mit einem Siedepunkt von unter 150°C bei Normaldruck (1 bar).

Als Polymerisationsinitiatoren kommen beispielsweise Azoverbindungen, Ketonperoxide und Alkylperoxide in Betracht, z.B. Acylperoxide wie Benzoylperoxid, Dilauroylperoxid, Didecanoylperoxid, Isononanoylperoxid, Alkylester wie tert.-Butyl-perpivalat, tert.-Butyl-per-2-ethylhexanoat, tert.-Butyl-per-maleinat, tert.-Butyl-per-isononanoat, tert.-Butyl-per-benzoat, tert.-Amylper-2-ethylhexanoat, Dialkylperoxide wie Dicumylperoxid, tert.-Butylcumylperoxid, Di-tert.-Butylperoxid und Peroxodicarbonate. Des Weiteren können als Initiatoren Azostarter wie beispielsweise 2,2'-Azobisisobutyronitril, 2,2'-Azobis(methylisobutyrat) oder 2,2'-Azobis(2,4-dimethylvaleronitril) Verwendung finden.

Für die Durchführung der Polymerisation, insbesondere zur Herstellung der Oligomere, können dem Reaktionsgemisch auch den Polymerisationsgrad senkende Verbindungen, sogenannte Polymerisationsregler zugesetzt werden, z.B. in Mengen von 0,1 bis 0,8 Gew.-Teile, bezogen auf 100 Gew.-Teile der zu polymerisierenden Monomeren. Geeignet sind z.B. Verbindungen mit einer Thiolgruppe beispielsweise Mercaptane wie Mercaptoethanol, tert.-Butylmercaptan, Mercaptobernsteinsäure, Thioglycolsäureethylhexylester, 3-Mercaptopropyltrimethoxysilan oder Dodecylmercaptan.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150 °C arbeitet. Die Polymerisate können dann in lösungsmittelfreiem Zustand (Lösungsmittelgehalt vorzugsweise kleiner 2 Gew.-%, bezogen auf die Gesamtzusammensetzung), d. h. als Schmelzen, eingesetzt werden.

Der erfindungsgemäße Schmelzklebstoff weist vorzugsweise eine Nullviskosität bei 130°C kleiner als 100 Pa s auf. Er wird in lösemittelfreier, schmelzbarer Form eingesetzt. Herstellungsbedingtes Lösungsmittel kann vorher nach geeigneten Verfahren entfernt werden, vorzugsweise auf einen Restgehalt von kleiner 0,5 Gew.%, bezogen auf den Feststoffgehalt.

Zur Herstellung der Beschichtungen werden die Schmelzhaftklebstoffe als Schmelze auf die zu beschichtenden Materialien, z.B. Substrate für Klebebänder oder Etiketten aufgetragen, wobei die Oberfläche zumindest teilweise mit einem erfindungsgemäßen Klebstoff beschichtet wird. Der Schmelzhaftklebstoff kann als Schmelze, d.h. im Allgemeinen bei Temperaturen von 50 bis 160 °C, vorzugsweise 80 bis 150 °C aufgetragen werden. Die Auftragsmenge des Haftklebstoffs ist vorzugsweise von 10 bis 100 g/m$^2$, besonders bevorzugt von 20 bis 70 g/m$^2$. Schichtdicken sind z.B. 2 bis 100 Mikrometer, vorzugsweise 10 bis 80 oder 20 bis 70 Mikrometer.

Als Träger in Betracht kommen Papier oder Polymerfilme, z.B. aus Polyester, Polyolefinen, insbesondere Polyethylen oder Polypropylen, PVC, Cellulose oder Polyacetat.

Der erfindungsgemäße Schmelzklebstoff wird nach Aufbringen auf die Träger mit energiereicher Strahlung, vorzugsweise UV-Licht, insbesondere UV-C Strahlung (200-280 nm) bestrahlt, so dass eine Vernetzung erfolgt. Im Allgemeinen werden die beschichteten Substrate dazu auf ein Transportband gelegt und das Transportband an einer Strahlungsquelle, z.B. einer UV-Lampe vorbeigeführt. Der Vernetzungsgrad der Polymerisate hängt von der Dauer und Intensität der Bestrahlung ab. Vorzugsweise beträgt die Strahlungsenergie insgesamt 100 bis 1500 mJ/cm$^2$ bestrahlte Fläche. Als UV-Strahler können die üblichen Strahler, beispielsweise Quecksilbermitteldrucklampen mit einer Strahlungsleistung von 80 bis 240 Watt/cm eingesetzt werden.

Der Haftklebstoff kann zur Herstellung von Haftklebeetiketten beispielsweise auch im Transferauftrag auf Träger wie Papier oder Polymerfolien aufgebracht werden, indem er zunächst auf abhäsiv beschichteten Trägermaterialien, beispielsweise silikonisiertem Papier aufgebracht und bestrahlt wird und anschließend beispielsweise auf Papier kaschiert wird. Nach dem Abziehen des silikonisierten Papiers kann die haftklebrige Schicht optional nochmals bestrahlt

werden. Die Haftklebemittel können in an sich üblicher Form modifiziert und/oder konfektioniert werden.

Auf diese Weise können Klebeartikel, insbesondere Klebeartikel mit haftklebrigen Eigenschaften hergestellt werden. Der erfindungsgemäße Schmelzklebstoff ist ein Material, welches insbesondere nach der Vernetzung durch Bestrahlung haftklebende Eigenschaften aufweist. Ein Haftklebstoff ist ein viskoelastischer Klebstoff, dessen abgebundener Film bei Raumtemperatur (20°C) in trockenem Zustand permanent klebrig und klebfähig bleibt.

Bevorzugte Klebeartikel sind Klebeetiketten, Klebebänder und selbstklebende Folien. Besonders bevorzugt sind Klebebänder. Gegenstand der Erfindung sind daher auch Klebebänder, welche auf einem bandförmigen Trägermaterial ein- oder beidseitig eine Beschichtung mit einem erfindungsgemäßen, strahlungsvernetzten Schmelzklebstoff aufweisen. Das Trägermaterial ist dabei vorzugsweise ausgewählt aus Polyethylen, Polypropylen, Cellulose, Polyacetat und Polyester.

Die erfindungsgemäßen Schmelzklebstoffe zeichnen sich dadurch aus, dass sie aufgrund der polaren Gruppen eine hohe Adhäsion zu den Substratoberflächen aufweisen und vor der Bestrahlung aufgrund der weichmachenden, viskositätssenkenden Wirkung der Oligomere gut auf Trägermaterialien aufgetragen werden können, die Oligomere ihre die Kohäsion negativ beeinflussende Wirkung aber nach Bestrahlung durch Pfropfungs- und/oder Vernetzungsreaktionen weitgehend verlieren und die bestrahlten Klebstoffschichten deshalb eine hohe Kohäsion besitzen.

Beispiele

Beispiel P1: Hochviskoses Basispolymer

In einer Polymerisationsapparatur bestehend aus Glasreaktor, Rückflusskühler, Rührer und Stickstoffeinlass werden in leichtem Stickstoffstrom 180 g Methylethylketon (MEK) vorgelegt und auf 80 °C erwärmt. Es werden 50 g einer Monomerenmischung bestehend aus 897g 2-Ethylhexylacrylat, 100g Acrylsäure, 8,57 g Photoinitiator der Formel F-1 (35%ig in o-Xylol) zugegeben. Nach Wiedererreichen von 80°C werden 2,65 g einer Starterlösung aus 8 g tert.-Butylperpivalat (75%ig in Mineralöl) und 45 g MEK zugegeben und 3 min anpolymerisiert. Dann werden die restlichen 955 g Monomerenmischung und 50,3 g Starterlösung in 3 h zugefahren. Anschließend wird die Temperatur auf 90°C erhöht und eine Lösung von 2,67g tert.-Butylperpivalat (75%ig in Mineralöl) in 21,7 g MEK in 30 min zugegeben. Danach wird Vakuum angelegt und das Lösungsmittel bei maximal 135°C und kleiner 50 mbar abdestilliert. Anschließend wird noch unter langsamem Rühren 1 h bei 135°C und Vakuum entgast.
K-Wert; 1% in THF: 43,1
Nullviskosität bei 130°C: 150 Pas

Beispiel P2 : Hochviskoses Basispolymer

In einer Polymerisationsapparatur bestehend aus Glasreaktor, Rückflusskühler, Rührer und Stickstoffeinlass werden in leichtem Stickstoffstrom 307,4 g MEK vorgelegt und auf 80 °C erwärmt. Es werden 85,8 g einer Monomerenmischung bestehend aus 1521,5 g 2-Ethylhexylacrylat, 170 g Acrylsäure, 24,29 g Photoinitiator der Formel F-1 (35%ig in o-Xylol) zugegeben. Nach Wiedererreichen von 80°C werden 4,51 g einer Starterlösung aus 13,6 g tert.-Butylperpivalat (75%ig in Mineralöl) und 76,5 g MEK zugegeben und 3 min anpolymerisiert, Dann werden die restlichen 1630 g Monomerenmischung und 85,6 g Starterlösung in 2h 45 min zugefahren. Anschließend wird die Temperatur auf 90°C erhöht und eine Lösung von 4,53 g tert.-Butylperpivalat (75%ig in Mineralöl) in 36,9 g MEK in 30 min zugegeben. Danach wird Vakuum angelegt und das Lösungsmittel bei maximal 135°C und kleiner 50 mbar abdestilliert. Anschließend wird noch unter langsamem Rühren 1 h bei 135°C und Vakuum entgast.
K-Wert; 1% in THF: 42,7
Nullviskosität bei 130°C: 136 Pas

Beispiel O3: Acrylatcopolymer mit Doppelbindungen

In einer Polymerisationsapparatur bestehend aus Glasreaktor, Rückflusskühler, Rührer und Stickstoffeinlass werden in leichtem Stickstoffstrom 300 g Isopropanol vorgelegt und auf 80 °C erwärmt. Es werden 57 g einer Monomerenmischung bestehend aus 680.00g Ethylhexylacrylat, 80.00g Acrylsäure, 40.00g Allylmethacrylat, 240.00g Isopropanol zugegeben. Nach Wiedererreichen von 80°C werden 8,57 g einer Starterlösung aus 21.33g tert.-Butylperpivalat (75%ig in Mineralöl) und 150.00g Isopropanol zugegeben und 3 min anpolymerisiert, Dann werden die restlichen 988 g Monomerenmischung und 162,7 g Starterlösung in 3 h. zugefahren. Anschließend wird die Temperatur auf 90°C erhöht und eine Lösung von 2,67 g tert.-Bu-tylperpivalat (75%ig in Mineralöl) in 24 g Isopropanol in 30 min zugegeben. Danach wird Vakuum angelegt und das Lösungsmittel bei maximal 135°C und kleiner 50 mbar abdestilliert. Anschließend wird noch unter langsamem Rühren 1 h bei 135°C und Vakuum entgast.
K-Wert; 1% in THF: 16

Nullviskosität bei 130°C: 2,6 Pas

Beispiel O4: Acrylatcopolymer mit Doppelbindungen

In einer Polymerisationsapparatur bestehend aus Glasreaktor, Rückflusskühler, Rührer und Stickstoffeinlass werden in leichtem Stickstoffstrom 437,5 g Isopropanol vorgelegt und auf 80°C erwärmt. Es werden 35 g einer Monomerenmischung bestehend aus 245 g Ethylhexylacrylat, 35g Acrylsäure, 70 g Dicyclopentadienylacrylat (DCPA) und 350 g Isopropanol zugegeben. Nach Wiedererreichen von 80°C werden 4,67 g einer Starterlösung aus 4,67 g tert.-Butylperpivalat (75%ig in Mineralöl) und 42g Isopropanol zugegeben und 3 min anpolymerisiert, Dann werden die restlichen 665 g Monomerenmischung und 42 g Starterlösung in 2 h 45 min zugefahren. Anschließend wird die Temperatur auf 90°C erhöht und eine Lösung von 0,93 g tert.-Butylperpivalat (75%ig in Mineralöl) in 28 g Isopropanol in 30 min zugegeben. Danach wird Vakuum angelegt und das Lösungsmittel bei maximal 135°C und kleiner 50 mbar abdestilliert. Anschließend wird noch unter langsamem Rühren 1 h bei 135°C und Vakuum entgast.
K-Wert; 1% in THF: 12,5
Nullviskosität bei 23°C: 3878 Pas

Beispiel O5: Acrylatcopolymer mit Doppelbindungen

In einer Polymerisationsapparatur bestehend aus Glasreaktor, Rückflusskühler, Rührer und Stickstoffeinlass werden in leichtem Stickstoffstrom 378 g Isopropanol vorgelegt und auf 80 °C erwärmt. Es werden 25 g einer Monomerenmischung bestehend aus 375 g n-Butylacrylat, 25 g Acrylsäure, 100 g DCPA zugegeben. Nach Wiedererreichen von 80°C werden 10,2 g einer Starterlösung aus 13,33 g tert.-Butylperpivalat (75%ig in Mineralöl) und 88,6 g Isopropanol zugegeben und 3 min anpolymerisiert, Dann werden die restlichen 475 g Monomerenmischung und 91,7 g Starterlösung in 2 h 45 min zugefahren. Anschließend wird die Temperatur auf 90°C erhöht und eine Lösung von 1,33 g tert.-Butylperpivalat (75%ig in Mineralöl) in 40 g Isopropanol in 30 min zugegeben. Danach wird Vakuum angelegt und das Lösungsmittel bei maximal 135°C und kleiner 50 mbar abdestilliert. Anschließend wird noch unter langsamem Rühren 1 h bei 135°C und Vakuum entgast.
K-Wert; 1% in THF: 14,6
Nullviskosität bei 23°C: 2137 Pas

Beispiel O6: Acrylatcopolymer mit Doppelbindungen

In einer Polymerisationsapparatur bestehend aus Glasreaktor, Rückflusskühler, Rührer und Stickstoffeinlass werden in leichtem Stickstoffstrom 437,5 g Isopropanol vorgelegt und auf 80 °C erwärmt. Es werden 35 g einer Monomerenmischung bestehend aus 245 g Ethylhexylacrylat, 35g Acrylsäure, 70 g DCPA und 350 g Isopropanol zugegeben. Nach Wiedererreichen von 80°C werden 7,1 g einer Starterlösung aus 9,33 g tert.-Butylperpivalat (75%ig in Mineralöl) und 62 g Isopropanol zugegeben und 3 min anpolymerisiert, Dann werden die restlichen 665 g Monomerenmischung und 64,2 g Starterlösung in 2 h 45 min zugefahren. Anschließend wird die Temperatur auf 90°C erhöht und eine Lösung von 0,93 g tert.-Butylperpivalat (75%ig in Mineralöl) in 28 g Isopropanol in 30 min zugegeben. Danach wird Vakuum angelegt und das Lösungsmittel bei maximal 135°C und kleiner 50 mbar abdestilliert. Anschließend wird noch unter langsamem Rühren 1 h bei 135°C und Vakuum entgast.
K-Wert; 1% in THF: 11,1
Nullviskosität bei 23°C: 647 Pas

Beispiel O7: Acrylatcopolymer mit Doppelbindungen

In einer Polymerisationsapparatur bestehend aus Glasreaktor, Rückflusskühler, Rührer und Stickstoffeinlass werden in leichtem Stickstoffstrom 1060 g Isopropanol vorgelegt und auf 80 °C erwärmt. Es werden 25 g einer Monomerenmischung bestehend aus 375 g n-Butylacrylat, 25 g Acrylsäure, 100 g DCPA zugegeben. Nach Wiedererreichen von 80°C werden 10,2 g einer Starterlösung aus 13,33 g tert.-Butylperpivalat (75%ig in Mineralöl) und 88,6 g Isopropanol zugegeben und 3 min anpolymerisiert, Dann werden die restlichen 475 g Monomerenmischung und 91,7 g Starterlösung in 2 h 45 min zugefahren. Anschließend wird die Temperatur auf 90°C erhöht und eine Lösung von1,33 g tert.-Butylperpivalat (75%ig in Mineralöl) in 40 g Isopropanol in 30 min zugegeben. Danach wird Vakuum angelegt und das Lösungsmittel bei maximal 135°C und kleiner 50 mbar abdestilliert. Anschließend wird noch unter langsamem Rühren 1 h bei 135°C und Vakuum entgast.
K-Wert; 1 % in THF: 10,9
Nullviskosität bei 23°C: 241 Pas

Beispiel 08

In einer Polymerisationsapparatur bestehend aus Glasreaktor, Rückflusskühler, Rührer und Stickstoffeinlass werden in leichtem Stickstoffstrom 300 g Isopropanol vorgelegt und auf 80°C erwärmt. Es werden 53 g einer Monomerenmischung bestehend aus 672 g Ethylhexylacrylat, 80.00 g Acrylsäure, 40.00 g Allylmethacrylat, 22,86 g Photoinitiatormonomer der Formel F-1 (35%ig in o-Xylol) und 240.00 g Isopropanol zugegeben. Nach Wiedererreichen von 80°C werden 8,57 g einer Starterlösung aus 21.33g tert.-Butylperpivalat (75%ig in Mineralöl) und 150.00g Isopropanol zugegeben und 3 min anpolymerisiert, Dann werden die restlichen1002 g Monomerenmischung und 162,7 g Starterlösung in 3 h zugefahren. Anschließend wird die Temperatur auf 90°C erhöht und eine Lösung von 2,67 g tert.-Butylperpivalat (75%ig in Mineralöl) in 24 g Isopropanol in 30 min zugegeben. Danach wird Vakuum angelegt und das Lösungsmittel bei maximal 135°C und kleiner 50 mbar abdestilliert. Anschließend wird noch unter langsamem Rühren 1 h bei 135°C und Vakuum entgast.
K-Wert; 1 % in TH F: 11,7
Nullviskosität bei 130°C: 0,5 Pas

Beispiel 09

In einer Polymerisationsapparatur bestehend aus Glasreaktor, Rückflusskühler, Rührer und Stickstoffeinlass werden in leichtem Stickstoffstrom 437,5 g Isopropanol vorgelegt und auf 80 °C erwärmt. Es werden 35 g einer Monomerenmischung bestehend aus 241 g Ethylhexylacrylat, 35g Acrylsäure, 70 g DCPA, 10 g Photoinitiatormonomer der Formel F-1 (35%ig in o-Xylol) und 350 g Isopropanol zugegeben. Nach Wiedererreichen von 80°C werden 4,67 g einer Starterlösung aus 4,67 g tert.-Butylperpivalat (75%ig in Mineralöl) und 42 g Isopropanol zugegeben und 3 min anpolymerisiert. Dann werden die restlichen 671 g Monomerenmischung und 42 g Starterlösung in 2 h 45 min zugefahren. Anschließend wird die Temperatur auf 90°C erhöht und eine Lösung von 0,93 g tert.-Butylperpivalat (75%ig in Mineralöl) in 28 g Isopropanol in 30 min zugegeben. Danach wird Vakuum angelegt und das Lösungsmittel bei maximal 135°C und kleiner 50 mbar abdestilliert. Anschließend wird noch unter langsamem Rühren 1 h bei 135°C und Vakuum entgast.
K-Wert; 1% in THF: 14,8
Nullviskosität bei 23°C: 1413 Pas

Beispiel O10

In einer Polymerisationsapparatur bestehend aus Glasreaktor, Rückflusskühler, Rührer und Stickstoffeinlass werden in leichtem Stickstoffstrom 378,8 g Isopropanol vorgelegt und auf 80 °C erwärmt. Es werden 25 g einer Monomerenmischung bestehend aus 450 g n-Butylacrylat, 25 g Acrylsäure, 25 g Allylmethacrylat zugegeben. Nach Wiedererreichen von 80°C werden 10,19 g einer Starterlösung aus 13,3 g tert.-Butylperpivalat (75%ig in Mineralöl) und 88,6 g Isopropanol zugegeben und 3 min anpolymerisiert, Dann werden die restlichen 475 g Monomerenmischung und 91,7 g Starterlösung in 2h 45 min zugefahren. Anschließend wird die Temperatur auf 90°C erhöht und eine Lösung von 1,33 g tert.-Butylperpivalat (75%ig in Mineralöl) in 40 g Isopropanol in 30 min zugegeben. Danach wird Vakuum angelegt und das Lösungsmittel bei maximal 135°C und kleiner 50 mbar abdestilliert. Anschließend wird noch unter langsamem Rühren 1 h bei 135°C und Vakuum entgast.
K-Wert; 1 % in THF: 16,2
Nullviskosität bei 23° C: 430 Pas

Beispiel P11 : Hochviskoses Basispolymer

In einer Polymerisationsapparatur bestehend aus Glasreaktor, Rückflusskühler, Rührer und Stickstoffeinlass werden in leichtem Stickstoffstrom 362,35 g MEK vorgelegt und auf 80°C erwärmt. Es werden 100,9 g einer Monomerenmischung bestehend aus 1690 g n-Butylacrylat, 100 g Acrylsäure, 200 g N-Vinylpyrrolidon und 28,6 g Photoinitiatormonomer der Formel F-1 (35%ig in o-Xylol) zugegeben. Nach Wiedererreichen von 80°C werden 4,78 g einer Starterlösung aus 21,6 g tert.-Butylperpivalat (75%ig in Mineralöl) und 74 g MEK zugegeben und 3 min anpolymerisiert, Dann werden die restlichen 1917,6 g Monomerenmischung und 48,7 g Starterlösung in 3 h zugefahren. Anschließend wird die Temperatur auf 90°C erhöht und eine Lösung von 5,33 g tert.-Butylperpivalat (75%ig in Mineralöl) in 43,4 g MEK in 30 min zugegeben. Danach wird Vakuum angelegt und das Lösungsmittel bei maximal 135°C und kleiner 50 mbar abdestilliert. Anschließend wird noch unter langsamem Rühren 1 h bei 135°C und Vakuum entgast.
K-Wert; 1% in THF: 42,9
Nullviskosität bei 130°C: 112 Pas

Beispiel 12

80 Teile des Polymeren aus Beispiel P2 werden mit 20 Teilen des Oligomers aus Beispiel 08 gemischt. Die Nullviskosität (130°C) beträgt 64 Pas.

Beispiel 13

80 Teile des Polymeren aus Beispiel P2 werden mit 20 Teilen des Oligomers aus Beispiel 04 gemischt. Die Nullviskosität (130°C) beträgt 79 Pas.

Beispiel 14

80 Teile des Polymeren aus Beispiel P2 werden mit 20 Teilen des Oligomers aus Beispiel 03 gemischt. Die Nullviskosität (130°C) beträgt 65,5 Pas.

Beispiel 15

80 Teile des Polymeren aus Beispiel P2 werden mit 20 Teilen des Oligomers aus Beispiel 09 gemischt. Die Nullviskosität (130°C) beträgt 65,6 Pas.

Beispiel 16

85 Teile des Polymeren aus Beispiel P11 werden mit 15 Teilen des Oligomers aus Beispiel O10 gemischt. Die Nullviskosität bei 130°C beträgt 73 Pas.

Vergleichsbeispiel V1

90 Teile des Polymeren aus Beispiel P1 werden zur Viskositätsreduzierung mit 10 Teilen Polymerweichmacher Palamoll 632 gemischt. Die Nullviskosität (130°C) beträgt 84 Pas.

Vergleichsbeispiel V2

84,6 Teile des Polymeren aus Beispiel P2 werden zur Viskositätsreduzierung mit 15,4 Teilen Palamoll® 632 gemischt. Die Nullviskosität (130°C) beträgt 84 Pas.

Messung der Klebewerte

Die Harze wurden mittels eines auf 110°C beheizten Streichtisches in einer Menge von 60 $g/m^2$ auf ein silikonisiertes Papier aufgetragen. Danach wurden die beschichteten Papiere mit UV-Licht bestrahlt (H-Spektrum; Hg-Mitteldruck, 120 W/cm, UV-C-Dosis 65 $mJ/cm^2$). Das bestrahlte Material wurde dann auf eine Polyesterfolie (Hostaphan® RN 36) transferiert.

Danach wurden folgende Prüfungen durchgeführt:

Der mit Haftklebstoff beschichtete Träger wurde in 25 mm breite Prüfstreifen geschnitten. Zur Bestimmung der Scherfestigkeit (Kohäsion) wurden die Prüfstreifen mit einer verklebten Fläche von 25 $mm^2$ auf die Prüfflache aus Stahl (Afera-Stahl) geklebt, mit einer 1 kg schweren Rolle 1 mal angerollt, 10 min gelagert (im Normklima, 50% rel. Luftfeuchtigkeit, 1 bar, 23 °C) und anschließend hängend mit einem 1 kg Gewicht belastet (im Normklima). Das Maß für die Scherfestigkeit ist die Zeit bis zum Abfallen des Gewichts. Es wurde jeweils der Durchschnitt aus 5 Messungen berechnet.

Bei der Bestimmung der Schälfestigkeit (Adhäsion) wurde jeweils ein 2,5 cm breiter Prüfstreifen auf die Prüffläche aus Stahl geklebt und mit einer 1 kg schweren Rolle 1-mal angerollt. Er wurde dann mit einem Ende in die oberen Backen einer Zug-Dehnungs-Prüfapparatur eingespannt. Der Klebestreifen wurde mit 300 mm/min unter einem 180° Winkel von der Prüffläche abgezogen d.h. der Klebestreifen wurde umgebogen und parallel zum Prüfblech abgezogen und der dazu benötigte Kraftaufwand gemessen. Das Maß für die Schälfestigkeit ist die Kraft in N/2,5 cm, die sich als Durchschnittswert aus fünf Messungen ergibt. Die Schälfestigkeit wurde 24 Stunden nach der Verklebung bestimmt. Nach dieser Zeit hat sich die Klebekraft voll ausgebildet.

Messung der Nullviskosität

Die Nullviskosität ist der Grenzwert der Viskositätsfunktion bei unendlich niedrigen Scherraten. Sie wird gemessen mit einem Anton Paar Rheometer MCR 100 (US 200 Auswertesoftware) in Platte/Platte Geometrie. Die Proben werden in oszillatorischer Scherung bei kleiner Scheramplitude von 10% vermessen. Temperatur 130°C (oder wie angegeben), Kreisfrequenzrampe log 100-0,1 1/s, Messspalt 0,5 mm, Auswertung nach Carreau-Gahleitner I, Stempeldurchmesser 25 mm.

Tabelle 1: Klebewerte

| Beispiel | Nullviskosität bei 130°C [Pa s] | Scherfestigkeit [min] | Schälfestigkeit [N/25 mm] |
|---|---|---|---|
| P2 (ohne Oligomer) | 136 | 394 | 14,5 |
| V2 (P2 + Palamoll) | 84 | 243 | 17,0 |
| Beispiel 12 (P2 + O8) | 64 | 493 | 17,7 |
| Beispiel 13 (P2 + O4) | 79 | 579 | 18,5 |
| Beispiel 14 (P2 + O3) | 66 | 480 | 14,5 |
| Beispiel 15 (P2 + O9) | 66 | 687 | 16,6 |

Die erfindungsgemäßen Beispiele 12-15 zeigen, dass durch Zusatz des Oligomers die Nullviskosität bei 130 °C abgesenkt werden kann, wobei die Scherfestigkeit nicht beeinträchtigt sondern sogar verbessert wird. Ein Zusatz herkömmlicher polymerer Weichmacher bewirkt zwar eine gewünschte Absenkung der Nullviskosität, führt aber zu einer Verschlechterung der Scherfestigkeit.

## Patentansprüche

**1.** Strahlungsvernetzbarer Schmelzklebstoff, enthaltend

(A) mindestens ein strahlungsvernetzbares Poly(meth)acrylat, welches zu mindestens 60 Gew.% aus C1- bis C18-Alkyl(meth)acrylaten gebildet ist und
(B) mindestens ein Oligo(meth)acrylat, welches eine oder mehrere nicht-acrylische, olefinische C-C-Doppelbindungen enthält und einen K-Wert von kleiner oder gleich 20 aufweist,
wobei der Schmelzklebstoff mindestens einen Fotoinitiator enthält, wobei der Fotoinitiator als nicht an das Poly(meth)acrylat A und nicht an das Oligo(meth)acrylat B gebundenes Additiv vorliegt und/oder der Fotoinitiator in das Poly(meth)acrylat A einpolymerisiert ist und/oder der Fotoinitiator an das Oligo(meth)acrylat B gebunden ist.

**2.** Schmelzklebstoff nach dem vorhergehenden Anspruch, **dadurch gekennzeichnet, dass** der mindestens eine Fotoinitiator ausschließlich in das Poly(meth)acrylat A einpolymerisiert ist.

**3.** Schmelzklebstoff nach einem der vorhergehenden Ansprüche, **dadurch gekennzeichnet, dass** das unvernetzte Poly(meth)acrylat A einen K-Wert von mindestens 30, vorzugsweise von 30 bis 80 aufweist und/oder keine nicht-acrylischen, olefinischen C-C-Doppelbindungen enthält und/oder der K-Wert des Oligo(meth)acrylats 10 bis 20 beträgt.

**4.** Schmelzklebstoff nach einem der vorhergehenden Ansprüche, **dadurch gekennzeichnet, dass** das strahlungsvernetzbare Poly(meth)acrylat vor Vernetzung eine Glasübergangstemperatur von -60 bis +10 °C aufweist.

**5.** Schmelzklebstoff nach einem der vorhergehenden Ansprüche, **dadurch gekennzeichnet, dass** das strahlungsvernetzbare Poly(meth)acrylat durch Bestrahlung mit UV-Licht vernetzbar ist.

**6.** Schmelzklebstoff nach einem der vorhergehenden Ansprüche, **dadurch gekennzeichnet, dass** der einpolymerisierte Fotoinitiator in Form eines ethylenisch ungesättigten, copolymerisierbaren Fotoinitiators in einer Menge von 0,05 bis 5 Gew.% in das Poly(meth)acrylat A copolymerisiert ist.

**7.** Schmelzklebstoff nach einem der vorhergehenden Ansprüche, **dadurch gekennzeichnet, dass** der Fotoinitiator in nicht einpolymerisierter Form die allgemeine Struktur A-X-B aufweist, wobei
A ein einwertiger organischer Rest ist, welcher eine Phenongruppe aufweist,

X eine Estergruppe ist, ausgewählt aus -O-C(=O)-, -(C=O)-O und -O-(C=O)-O-,
und B ein einwertiger organischer Rest ist, welcher eine ethylenisch ungesättigte, radikalisch polymerisierbare Gruppe enthält.

**8.** Schmelzklebstoff nach dem vorhergehenden Anspruch, **dadurch gekennzeichnet, dass** der Fotoinitiator in nicht einpolymerisierter Form die allgemeine Struktur

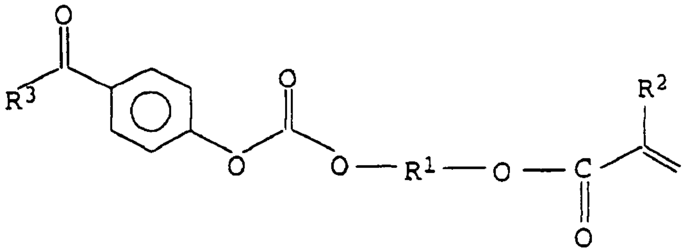

aufweist, worin R1 für einen divalenten organischen Rest mit bis zu 30 C-Atomen, R2 für ein H-Atom oder eine Methylgruppe und R3 für eine substituierte oder unsubstituierte Phenylgruppe oder für eine C1-C4-Alkylgruppe steht.

**9.** Schmelzklebstoff nach einem der vorhergehenden Ansprüche, **dadurch gekennzeichnet, dass** er mindestens ein strahlungsvernetzbares Poly(meth)acrylat enthält, wobei das Poly(meth)acrylat zusätzlich zu den C1- bis C18-Alkyl(meth)acrylaten aus mindestens einem Monomeren mit polaren Gruppen gebildet ist, wobei die polaren Gruppen ausgewählt sind aus Carbonsäuregruppen, Carbonsäureanhydridgruppen, Hydroxygruppen, Ureidogruppen, Pyrrolidongruppen, Amidgruppen, Urethangruppen, Harnstoffgruppen, Piperidinylgruppen, Piperazinylgruppen, Morpholinylgruppen, Imidazoylgruppen und Kombinationen von zwei oder mehr der genannten Gruppen.

**10.** Schmelzklebstoff nach dem vorhergehenden Anspruch, **dadurch gekennzeichnet, dass** das Poly(meth)acrylatpolymer zu 0,1 bis 30 Gew.%, bevorzugt zu 0,5 bis 25 Gew.% aus den Monomeren mit polaren Gruppen gebildet ist.

**11.** Schmelzklebstoff nach einem der vorhergehenden Ansprüche, **dadurch gekennzeichnet, dass** er mindestens ein strahlungsvernetzbares Poly(meth)acrylat enthält, wobei das Poly(meth)acrylat

(a1) zu mindestens 80 Gew.% aus mindestens einem Acrylat besteht, welches ausgewählt ist aus der Gruppe bestehend aus n-Butylacrylat, n-Hexylacrylat, 2-Ethyl-hexylacrylat, Propylheptylacrylat und deren Mischungen und
(a2) zu 1 bis15 Gew.% aus Monomeren mit polaren Gruppen besteht, wobei die polaren Gruppen ausgewählt sind aus Carbonsäuregruppen, Carbonsäureamidgruppen, Pyrrolidongruppen, Urethangruppen und Harnstoffgruppen.

**12.** Schmelzklebstoff nach einem der vorhergehenden Ansprüche, **dadurch gekennzeichnet, dass** das Oligo(meth)acrylat gebildet ist aus mindestens 40 Gew.-%, bevorzugt zu mindestens 60 Gew.-% oder zu mindestens 80 Gew.-% aus C1- bis C20-Alkyl(meth)acrylaten und mindestens einem Monomer mit nicht-acrylischer C-C-Doppelbindung.

**13.** Schmelzklebstoff nach einem der vorhergehenden Ansprüche, **dadurch gekennzeichnet, dass** Monomere mit nicht-acrylischer C-C Doppelbindung ausgewählt sind aus der Gruppe bestehend aus Allyl(meth)acrylat, Monomeren mit mindestens einer (Meth)acrylgruppe und Monomeren mit mindestens einer Dihydrodicyclopentadienylgruppe und deren Mischungen.

**14.** Schmelzklebstoff nach einem der vorhergehenden Ansprüche, **dadurch gekennzeichnet, dass** das Oligo(meth)acrylat 0,0001 bis 0,5 Mol /100 g vernetzbare Gruppen mit nicht-acrylischer C-C Doppelbindung enthält.

**15.** Schmelzklebstoff nach einem der vorhergehenden Ansprüche, **dadurch gekennzeichnet, dass** die Nullviskosität bei 130°C kleiner als 100 Pa s beträgt und/oder die Nullviskosität des Oligo(meth)acrylats bei 23°C kleiner als 5000 Pa s, vorzugsweise kleiner als 3000 Pa s, besonders bevorzugt kleiner als 1000 Pa s beträgt.

**16.** Schmelzklebstoff nach einem der vorhergehenden Ansprüche, **dadurch gekennzeichnet, dass** das Gewichtsverhältnis von strahlungsvernetzbarem Poly(meth)acrylat zu Oligo(meth)acrylat im Bereich von 99:1 bis 50:50, vorzugsweise von 95:5 bis 75: 25 liegt.

**17.** Klebeband welches auf einem bandförmigen Trägermaterial ein- oder beidseitig eine Beschichtung mit einem strahlungsvernetzten Schmelzklebstoff gemäß einem der vorhergehenden Ansprüche aufweist.

**18.** Klebeband nach dem vorhergehenden Anspruch, **dadurch gekennzeichnet, dass** das Trägermaterial ausgewählt ist aus Polyethylen, Polypropylen, Cellulose, Polyacetat und Polyester.

**19.** Verwendung von strahlungsvernetzbarem Schmelzklebklebstoff gemäß einem der Ansprüche 1 bis 16 zur Herstellung von Klebebändern.

**Claims**

**1.** A radiation-crosslinkable hotmelt adhesive comprising

(A) at least one radiation-crosslinkable poly(meth)acrylate formed to an extent of at least 60% by weight of C1 to C18 alkyl (meth)acrylates and
(B) at least one oligo(meth)acrylate which comprises one or more nonacrylic, olefinic C-C double bonds and has a K value of less than or equal to 20,
the hotmelt adhesive comprising at least one photoinitiator, the photoinitiator being present in the form of an additive not attached to the poly(meth)acrylate A and not attached to the oligo(meth)acrylate B, and/or the photoinitiator being incorporated by copolymerization into the poly(meth)acrylate A, and/or the photoinitiator being attached to the oligo(meth)acrylate B.

**2.** The hotmelt adhesive according to the preceding claim, wherein the at least one photoinitiator is exclusively incorporated by copolymerization into the poly(meth)acrylate A.

**3.** The hotmelt adhesive according to either of the preceding claims, wherein the noncrosslinked poly (meth) acrylate A has a K value of at least 30, preferably of 30 to 80, and/or comprises no nonacrylic, olefinic C-C double bonds and/or the K value of the oligo(meth)acrylate is 10 to 20.

**4.** The hotmelt adhesive according to any of the preceding claims, wherein the radiation-crosslinkable poly(meth)acrylate before crosslinking has a glass transition temperature of -60 to +10°C.

**5.** The hotmelt adhesive according to any of the preceding claims, wherein the radiation-crosslinkable poly(meth)acrylate is crosslinkable by irradiation with UV light.

**6.** The hotmelt adhesive according to any of the preceding claims, wherein the copolymerized photoinitiator is copolymerized into the poly(meth)acrylate A in the form of an ethylenically unsaturated copolymerizable photoinitiator in an amount of 0.05 to 5% by weight.

**7.** The hotmelt adhesive according to any of the preceding claims, wherein the photoinitiator in noncopolymerized form has the general structure A-X-B, where
A is a monovalent organic radical which contains a phenone group,
X is an ester group selected from -O-C(=O)-, -(C=O)-O and -O-(C=O)-O-,
and B is a monovalent organic radical which comprises an ethylenically unsaturated, free-radically polymerizable group.

**8.** The hotmelt adhesive according to the preceding claim, wherein the photoinitiator in noncopolymerized form has the general structure

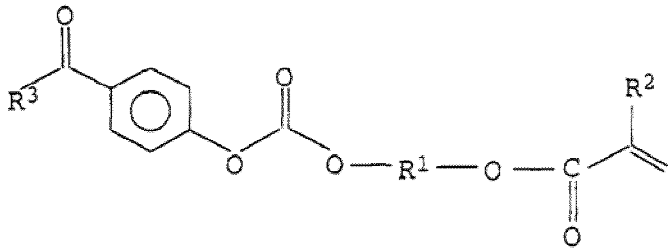

in which $R^1$ is a divalent organic radical having up to 30 C atoms, $R^2$ is an H atom or a methyl group, and $R^3$ is a substituted or unsubstituted phenyl group or is a C1-C4 alkyl group.

9. The hotmelt adhesive according to any of the preceding claims, which comprises at least one radiation-crosslinkable poly(meth)acrylate, the poly(meth)acrylate being formed, in addition to the C1 to C18 alkyl (meth)acrylates, from at least one monomer having polar groups, the polar groups being selected from carboxylic acid groups, carboxylic anhydride groups, hydroxyl groups, ureido groups, pyrrolidone groups, amide groups, urethane groups, urea groups, piperidyl groups, piperazinyl groups, morpholinyl groups, imidazolyl groups, and combinations of two or more of said groups.

10. The hotmelt adhesive according to the preceding claim, wherein the poly(meth)acrylate polymer is formed to an extent of 0.1 to 30% by weight, preferably of 0.5% to 25% by weight, of the monomers having polar groups.

11. The hotmelt adhesive according to any of the preceding claims, comprising at least one radiation-crosslinkable poly(meth)acrylate, the poly(meth)acrylate

(a1) consisting to an extent of at least 80% by weight of at least one acrylate selected from the group consisting of n-butyl acrylate, n-hexyl acrylate, 2-ethylhexyl acrylate, propylheptyl acrylate, and mixtures thereof, and
(a2) consisting to an extent of 1% to 15% by weight of monomers having polar groups, the polar groups being selected from carboxylic acid groups, carboxamide groups, pyrrolidone groups, urethane groups, and urea groups.

12. The hotmelt adhesive according to any of the preceding claims, wherein the oligo(meth)acrylate is formed from at least 40% by weight, preferably at least 60% by weight or at least 80% by weight of C1 to C20 alkyl (meth)acrylates and at least one monomer with nonacrylic C-C double bond.

13. The hotmelt adhesive according to any of the preceding claims, wherein monomers with nonacrylic C-C double bond are selected from the group consisting of allyl (meth)acrylate, monomers having at least one (meth)acrylic group, and monomers having at least one dihydrodicyclopentadienyl group, and mixtures thereof.

14. The hotmelt adhesive according to any of the preceding claims, wherein the oligo(meth)acrylate comprises 0.0001 to 0.5 mol/100 g of crosslinkable groups with nonacrylic C-C double bond.

15. The hotmelt adhesive according to any of the preceding claims, wherein the zero-shear viscosity at 130°C is less than 100 Pa s and/or the zero-shear viscosity of the oligo(meth)acrylate at 23°C is less than 5000 Pa s, preferably less than 3000 Pa s, more preferably less than 1000 Pa s.

16. The hotmelt adhesive according to any of the preceding claims, wherein the weight ratio of radiation-crosslinkable poly(meth)acrylate to oligo(meth)acrylate is in the range from 99:1 to 50:50, preferably from 95:5 to 75:25.

17. An adhesive tape which on one or both sides of a tapelike carrier material has a coating comprising a radiation-crosslinked hotmelt adhesive according to any of the preceding claims.

18. The adhesive tape according to the preceding claim, wherein the carrier material is selected from polyethylene, polypropylene, cellulose, polyacetate, and polyester.

19. The use of a radiation-crosslinkable hotmelt adhesive according to any of claims 1 to 16 for producing adhesive tapes.

## Revendications

1. Adhésif thermofusible réticulable par rayonnement, contenant :

   (A) au moins un poly(méth)acrylate réticulable par rayonnement, qui est formé d'au moins 60 % en poids de (méth)acrylates d'alkyle en C1 à C18 et
   (B) au moins un oligo(méth)acrylate, qui contient une ou plusieurs doubles liaisons C-C oléfiniques non acryliques et qui présente une valeur K inférieure ou égale à 20,
   l'adhésif thermofusible contenant au moins un photoinitiateur, le photoinitiateur se présentant sous la forme d'un additif non relié au poly(méth)acrylate A et non relié à l'oligo(méth)acrylate B et/ou le photoinitiateur étant copolymérisé dans le poly(méth)acrylate A et/ou le photoinitiateur étant relié à l'oligo(méth)acrylate B.

2. Adhésif thermofusible selon la revendication précédente, **caractérisé en ce que** le ou les photoinitiateurs sont exclusivement copolymérisés dans le poly(méth)acrylate A.

3. Adhésif thermofusible selon l'une quelconque des revendications précédentes, **caractérisé en ce que** le poly(méth)acrylate A non réticulé présente une valeur K d'au moins 30, de préférence de 30 à 80 et/ou ne contient pas de doubles liaisons C-C oléfiniques non acryliques et/ou la valeur K de l'oligo(méth)acrylate est de 10 à 20.

4. Adhésif thermofusible selon l'une quelconque des revendications précédentes, **caractérisé en ce que** le poly(méth)acrylate réticulable par rayonnement présente avant la réticulation une température de transition vitreuse de -60 à +10 °C.

5. Adhésif thermofusible selon l'une quelconque des revendications précédentes, **caractérisé en ce que** le poly(méth)acrylate réticulable par rayonnement est réticulable par exposition à la lumière UV.

6. Adhésif thermofusible selon l'une quelconque des revendications précédentes, **caractérisé en ce que** le photoinitiateur copolymérisé est copolymérisé dans le poly(méth)acrylate A sous la forme d'un photoinitiateur éthyléniquement insaturé copolymérisable en une quantité de 0,05 à 5 % en poids.

7. Adhésif thermofusible selon l'une quelconque des revendications précédentes, **caractérisé en ce que** le photoinitiateur présente sous forme non copolymérisée la structure générale A-X-B,
   A étant un radical organique monovalent qui comprend un groupe phénone,
   X étant un groupe ester choisi parmi -O-C(=O)-, -(C=O)-O et -O-(C=O)-O-,
   et B est un radical organique monovalent qui contient un groupe éthyléniquement insaturé polymérisable par voie radicalaire.

8. Adhésif thermofusible selon la revendication précédente, **caractérisé en ce que** le photoinitiateur présente sous forme non copolymérisée la structure générale

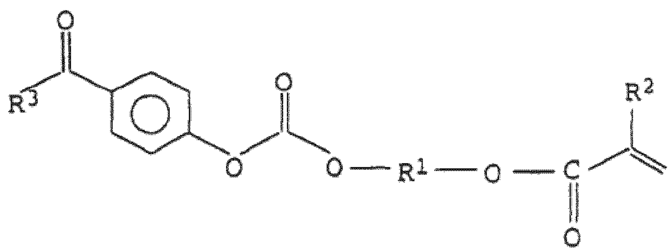

   $R^1$ représentant un radical organique bivalent contenant jusqu'à 30 atomes C, $R^2$ représentant un atome H ou un groupe méthyle et $R^3$ représentant un groupe phényle substitué ou non substitué ou un groupe alkyle en C1-C4.

9. Adhésif thermofusible selon l'une quelconque des revendications précédentes, **caractérisé en ce qu'**il contient au moins un poly(méth)acrylate réticulable par rayonnement, le poly(méth)acrylate étant formé d'au moins un monomère contenant des groupes polaires en plus des (méth)acrylates d'alkyle en C1 à C18, les groupes polaires étant choisis parmi les groupes acide carboxylique, les groupes anhydride d'acide carboxylique, les groupes hydroxy, les groupes uréido, les groupes pyrrolidone, les groupes amide, les groupes uréthane, les groupes urée, les groupes

pipéridinyle, les groupes pipérazinyle, les groupes morpholinyle, les groupes imidazoyle et les combinaisons de deux ou plus des groupes cités.

**10.** Adhésif thermofusible selon la revendication précédente, **caractérisé en ce que** le polymère de poly(méth)acrylate est formé de 0,1 à 30 % en poids, de préférence de 0,5 à 25 % en poids, des monomères contenant des groupes polaires.

**11.** Adhésif thermofusible selon l'une quelconque des revendications précédentes, **caractérisé en ce qu'**il contient au moins un poly(méth)acrylate réticulable par rayonnement, le poly(méth)acrylate

(a1) étant constitué d'au moins 80 % en poids d'au moins un acrylate, qui est choisi dans le groupe constitué par l'acrylate de n-butyle, l'acrylate de n-hexyle, l'acrylate de 2-éthylhexyle, l'acrylate de propylheptyle et leurs mélanges, et
(a2) étant constitué de 1 à 15 % en poids de monomères contenant des groupes polaires, les groupes polaires étant choisis parmi les groupes acide carboxylique, les groupes amide d'acide carboxylique, les groupes pyrrolidone, les groupes uréthane et les groupes urée.

**12.** Adhésif thermofusible selon l'une quelconque des revendications précédentes, **caractérisé en ce que** l'oligo(méth)acrylate est formé d'au moins 40 % en poids, de préférence d'au moins 60 % en poids ou d'au moins 80 % en poids, de (méth)acrylates d'alkyle en C1 à C20 et d'au moins un monomère contenant une double liaison C-C non acrylique.

**13.** Adhésif thermofusible selon l'une quelconque des revendications précédentes, **caractérisé en ce que** les monomères contenant une double liaison C-C non acrylique sont choisis dans le groupe constitué par le (méth)acrylate d'allyle, les monomères contenant au moins un groupe (méth)acrylique et les monomères contenant au moins un groupe dihydrodicyclopentadiényle et leurs mélanges.

**14.** Adhésif thermofusible selon l'une quelconque des revendications précédentes, **caractérisé en ce que** l'oligo(méth)acrylate contient 0,0001 à 0,5 mol/100 g de groupes réticulables contenant une double liaison C-C non acrylique.

**15.** Adhésif thermofusible selon l'une quelconque des revendications précédentes, **caractérisé en ce que** la viscosité zéro à 130 °C est inférieure à 100 Pa s et/ou la viscosité zéro de l'oligo(méth)acrylate à 23 °C est inférieure à 5 000 Pa s, de préférence inférieure à 3 000 Pa s, de manière particulièrement préférée inférieure à 1 000 Pa s.

**16.** Adhésif thermofusible selon l'une quelconque des revendications précédentes, **caractérisé en ce que** le rapport en poids entre le poly(méth)acrylate réticulable par rayonnement et l'oligo(méth)acrylate se situe dans la plage allant de 99:1 à 50:50, de préférence de 95:5 à 75:25.

**17.** Bande adhésive qui présente sur un matériau support en forme de bande sur un côté ou les deux côtés un revêtement comprenant un adhésif thermofusible réticulé par rayonnement selon l'une quelconque des revendications précédentes.

**18.** Bande adhésive selon la revendication précédente, **caractérisée en ce que** le matériau support est choisi parmi le polyéthylène, le polypropylène, la cellulose, le polyacétate et le polyester.

**19.** Utilisation d'un adhésif thermofusible réticulable par rayonnement selon l'une quelconque des revendications 1 à 16 pour la fabrication de bandes adhésives.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102004058070
- EP 246848 A
- EP 377191 A
- EP 445641 A
- WO 0123488 A
- EP 1213306 A
- WO 03066704 A


### In der Beschreibung aufgeführte Nicht-Patentliteratur


- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989